Europäisches Patentamt

European Patent Office

Office européen des brevets

(19)

(11) **EP 0 528 709 B2**

(12) **NOUVEAU FASCICULE DE BREVET EUROPEEN**

(45) Date de publication et mention de la décision concernant l'opposition:
**24.06.1998 Bulletin 1998/26**

(45) Mention de la délivrance du brevet:
**10.01.1996 Bulletin 1996/02**

(21) Numéro de dépôt: **92402119.9**

(22) Date de dépôt: **22.07.1992**

(51) Int. Cl.$^6$: **B01D 53/14**

(54) **Procédé de séparation d'un mélange de gaz par absorption**

Verfahren zum Zerlegen eines Gasgemisches mittels Absorption

Process for separating a gas mixture by means of absorption

(84) Etats contractants désignés:
**BE DE DK FR GB IT NL**

(30) Priorité: **08.08.1991 FR 9110229**

(43) Date de publication de la demande:
**24.02.1993 Bulletin 1993/08**

(73) Titulaire:
**INSTITUT FRANCAIS DU PETROLE**
**92502 Rueil-Malmaison (FR)**

(72) Inventeurs:
 • **Lermite, Christophe**
   **F-75014 Paris (FR)**
 • **Larue, Joseph**
   **F-78240 Chambourcy (FR)**

 • **Rojey, Alexandre**
   **F-92500 Rueil Malmaison (FR)**

(74) Mandataire:
   **Lewald, Dietrich, Dipl.-Ing. et al**
   **Lewald & Partner**
   **Patentanwälte**
   **Rindermarkt 6**
   **80331 München (DE)**

(56) Documents cités:
   **EP-A- 0 207 199**          **EP-A- 0 362 023**
   **DE-B- 1 905 627**          **DE-C-  935 144**
   **DE-C- 1 544 080**          **FR-A- 2 479 701**
   **US-A- 4 149 857**

EP 0 528 709 B2

**Description**

L'invention concerne un procédé de séparation d'un mélange de gaz par absorption.

L'absorption par un solvant circulant en boucle est un procédé communément employé lorsque l'on désire extraire au moins en partie un constituant ou une certaine catégorie de constituants d'un courant gazeux.

Le procédé mis en oeuvre comprend généralement deux étapes, une étape d'absorption proprement dite, dans laquelle le gaz à traiter et le solvant sont mis en contact à contre-courant dans une colonne verticale, puis une étape de régénération du solvant, dans laquelle la fraction gazeuse absorbée durant la première étape est désorbée par un effet de température, ou de pression, ou des deux cumulés. Le solvant ainsi régénéré peut alors être renvoyé vers la première étape.

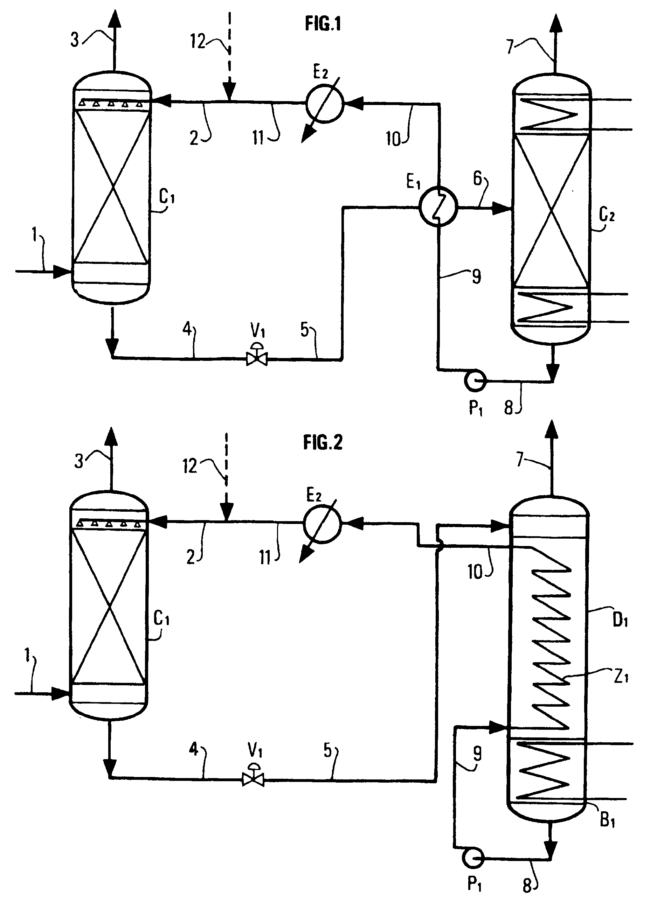

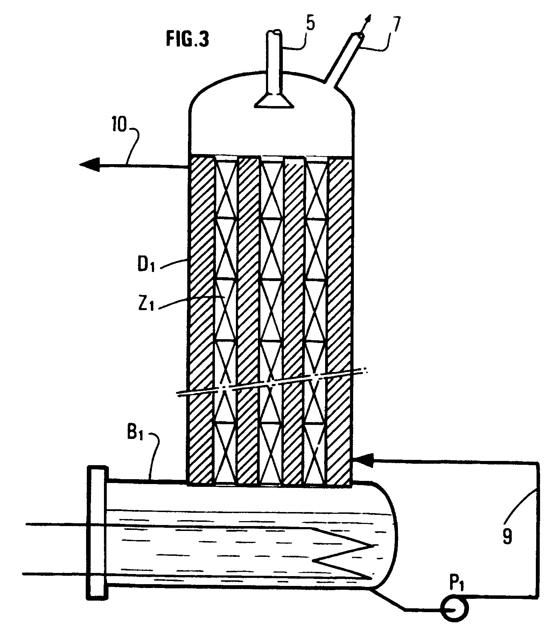

Dans le cas où il est nécessaire d'élever la température du solvant pour le régénérer, il est essentiel de récupérer la chaleur mise en jeu pour un bon bilan thermique du procédé. Le moyen généralement employé est décrit ci-après, en liaison avec la figure 1.

Le solvant sortant de la colonne d'absorption C1 par le conduit 4, après une éventuelle détente dans la vanne V1, et le solvant régénéré sortant de la colonne de régénération C2 par le conduit 8, à travers la pompe P1 et par le conduit 9, passent dans une zone d'échange thermique E1, à la sortie de laquelle le solvant chargé rentre, chaud et partiellement vaporisé, dans la colonne de régénération C2 par le conduit 6, ce qui économise de l'énergie au niveau du rebouilleur de ladite colonne de régénération, et le solvant régénéré refroidi est renvoyé vers l'étape d'absorption par le conduit 10, ladite absorption étant en général favorisée à basse température. La chaleur fournie au rebouilleur de la colonne C2 est ainsi partiellement récupérée dans l'échangeur de chaleur E1. Cependant, ce procédé génère des pertes thermiques irréversibles, du fait que le solvant vaporisé dans l'échangeur de chaleur E1 et dans le rebouilleur de la colonne C2 doit être recondensé en tête de la colonne C2 par un fluide froid externe au procédé.

Il a été découvert, et c'est l'un des objets de la présente invention, que le bilan thermique de la régénération d'un solvant d'absorption peut être sensiblement amélioré lorsque la régénération du solvant est réalisée dans un dispositif tel que d'une part l'énergie fournie au rebouilleur dudit dispositif soit efficacement récupérée, et d'autre part que la recondensation du solvant vaporisé se fasse en partie au moins sans intervention d'un fluide externe au procédé.

D'une manière générale, le procédé de séparation d'un mélange de gaz G1 selon l'invention est défini par la revendication 1.

Un échange thermique entre le solvant régénéré et du solvant provenant de l'absorption dans une zone interne à la zone de désorption est certes connu par le document DE-C-1 544 080 dont la Fig. 2 illustre un tel échange mais la fonction mentionnée d'un tel échange est une contribution au refroidissement du solvant régénéré et cet échange n'intéresse qu'une parmi plusieurs zones de désorption.

Il a été découvert, et c'est là l'un des principaux objets de la présente invention, que la mise en oeuvre d'une zone d'échange de chaleur interne permet une économie substantielle sur la chaleur à apporter au rebouilleur.

Cette économie peut être telle que la totalité de l'échange thermique entre le solvant L1 chargé sortant de l'étape d'absorption (a) et le solvant L1 régénéré sortant de l'étape de désorption (c) est réalisée dans la zone Z1.

La zone d'échange interne permet de refroidir le solvant régénéré, ce qui permet la recondensation au moins partielle du solvant vaporisé dans le rebouilleur et, donc, diminue d'autant la puissance frigorifique à fournir pour refroidir le solvant régénéré à la température désirée avant réinjection dans la zone d'absorption C1.

Le procédé selon la présente invention est ainsi particulièrement adapté à l'absorption réfrigérée de produits volatils, nécessitant un sous-refroidissement du solvant régénéré avant réinjection dans la colonne d'absorption C1.

Il peut être toutefois également adapté à un procédé opérant à température ambiante ou au-dessus, tel que par exemple un procédé de déshydratation par lavage avec un glycol ou un procédé de désacidification par lavage avec une amine.

Le procédé selon l'invention est décrit plus en détail ci-après en liaison avec la figure 2.

La charge à traiter arrive par le conduit 1 dans la colonne d'absorption C1, dans laquelle elle est mise en contact à contre-courant avec le solvant régénéré arrivant par le conduit 2. Le gaz allégé de sa fraction absorbée dans le solvant sort de la colonne C1 par le conduit 3 et est évacué du procédé. Le solvant ayant absorbé ladite fraction sort de la colonne C1 par le conduit 4, est détendu et partiellement vaporisé dans la vanne V1, à la sortie de laquelle il est envoyé par le conduit 5 vers le dispositif de désorption D1, qui comprend une zone de rebouillage B1 et une zone d'échange de chaleur interne Z1.

La température dans la zone de rebouillage B1 est généralement comprise entre 70°C et 220°C.

L'écart de température subi dans la zone Z1 par le solvant descendant dans le dispositif en contact avec la vapeur et l'écart de température subi par le solvant remontant du rebouilleur B1 dans la zone Z1 sont généralement tous deux supérieurs à 50°C.

La pression dans le dispositif de désorption D1 est généralement comprise entre 1 et 10 bar.

Après remontée dans la zone d'échange de chaleur interne Z1, le solvant sort du dispositif de désorption D1 et est envoyé vers l'échangeur E2 par le conduit 10.

Selon un mode particulier de réalisation du procédé de l'invention, la zone d'échange Z1 est réalisée au moyen d'un dispositif vertical comportant des moyens d'échange thermique à contre-courant entre le solvant L1 et le solvant provenant de l'étape de rebouillage, ainsi que des moyens de contact à contre-courant entre le solvant L1 et la phase vapeur, et en ce que le solvant L1 provenant de l'étape (b) est envoyé en tête de la zone d'échange Z1 et le solvant provenant de la zone de rebouillage B1 est envoyé en fond de la zone d'échange Z1.

Par ailleurs, il peut être avantageux que la hauteur du dispositif vertical constituant la zone d'échange Z1 permette de réaliser l'équivalent d'au moins trois étages théoriques de contact entre le solvant L1 et la phase vapeur.

Le solvant régénéré est refroidi à la température désirée dans l'échangeur E2, évacué par le conduit 11, mélangé avec l'appoint de solvant arrivant par le conduit 12, puis envoyé vers la colonne d'absorption C1 par le conduit 2.

Le procédé selon la présente invention peut être réalisé avec un solvant physique aussi bien qu'avec un solvant chimique impliquant une réaction avec l'absorbat, ou un mélange comprenant au moins un solvant physique et au moins un solvant chimique.

Le procédé selon la présente invention peut être appliqué, par exemple, à l'extraction au moins partielle de l'eau, des gaz acides ou de la fraction hydrocarbure la plus lourde d'un gaz naturel.

Le dispositif de désorption D1 est décrit ci-après en liaison avec la figure 3.

Il comprend principalement :

- Une zone de rebouillage B1, qui comprend un ballon d'une capacité permettant l'immersion dans le solvant régénéré d'un dispositif de rebouillage connu de l'homme de l'art, comme par exemple un chauffage électrique, ou une épingle de circulation d'un fluide caloporteur, ou encore un tube à feu; et

- Une zone d'échange de chaleur Z1, située au-dessus de la zone de rebouillage B1, constituée de deux espaces de circulation, tels que dans l'un de ces espaces s'écoule par gravité le solvant chargé arrivant en tête du dispositif de désorption D1 par le conduit 5, à contre-courant de la vapeur remontant de la zone de rebouillage B1 à travers ladite zone d'échange de chaleur Z1, ladite vapeur étant ensuite évacuée du dispositif de désorption D1 par le conduit 7, dans l'autre espace s'écoule de bas en haut le solvant régénéré sortant de la zone de rebouillage B1 par le conduit 8, à travers la pompe P1 et rentrant dans la zone d'échange de chaleur Z1 par le conduit 9, puis sortant de ladite zone d'échange de chaleur Z1 par le conduit 10.

La zone d'échange de chaleur interne Z1 peut être réalisée selon différentes configurations, dont quelques exemples sont détaillés ci-après.

Par exemple la zone d'échange de chaleur Z1 peut être constituée de tubes verticaux dans lesquels le solvant à régénérer coule en film tombant sur les parois internes des tubes tandis que le solvant régénéré remontant de la zone de rebouillage B1 circule à l'extérieur des tubes dans la calandre. La paroi interne desdits tubes verticaux peut être lisse, mais également présenter des aspérités, ou avoir subi un traitement de surface favorisant le transfert de matière et de chaleur entre les phases circulant à l'intérieur des tubes, ainsi que le transfert de chaleur entre les phases circulant de part et d'autre de la paroi des tubes. Par exemple, la surface interne des tubes pourra avoir une géométrie favorisant l'apparition de vagues au sein du film de liquide tombant, ou bien présenter des cannelures dans l'axe des tubes de manière à augmenter la surface interne de ceux-ci, ou bien pourra être enduite d'un dépôt de particules solides agglomérées favorisant la nucléation de bulles de vapeur au sein du film de liquide tombant.

Lesdits tubes verticaux peuvent également être remplis de garnissage en vrac comme par exemple des billes, des anneaux ou des selles. De préférence, la plus grande dimension d'un élément de garnissage sera inférieure au huitième du diamètre desdits tubes.

Lesdits tubes verticaux peuvent également être remplis de garnissage structuré constitués par exemple de toile métallique, de tricot métallique, de plaques ou de croisillons tels qu'utilisés par exemple dans les mélangeurs statiques.

Une autre configuration possible consiste à opérer sur la surface externe des tubes le contact entre le solvant à régénérer et la vapeur remontant de la zone de rebouillage B1 par la calandre, le solvant régénéré remontant de la zone de rebouillage B1 par l'intérieur des tubes. Dans ce cas, la calandre peut être vide ou remplie de garnissage en vrac ou structuré. Dans ce cas également, la surface externe des tubes peut être lisse ou présenter des aspérités, ou avoir subi un traitement de surface favorisant le transfert de matière et de chaleur entre les phases circulant à l'extérieur des tubes, ainsi que le transfert de chaleur entre les phases circulant de part et d'autre de la paroi des tubes.

La zone d'échange de chaleur Z1 peut également avoir toute structure connue de l'homme de l'art, par exemple les deux espaces de circulation peuvent être constitués pour l'un de tubes bobinés, pour l'autre d'une calandre entourant lesdits tubes; lesdits espaces de circulation peuvent également être délimités par un ensemble de plaques.

Le dispositif de désorption D1 pourra également comprendre un dispositif de répartition du solvant chargé dans l'espace de circulation correspondant de la zone d'échange de chaleur Z1 lorsque cet espace est multiple (par exemple constitué de tubes). De tels dispositifs sont connus de l'homme de l'art.

Dans les deux exemples suivants, on compare les schémas illustrés par les figures 1 et 2. Dans les deux cas, le gaz à traiter (G1) est un gaz d'hydrocarbures légers allant du méthane au butane, dont on veut extraire la fraction $C_3^+$ (propane+n-butane) par un solvant (L1) composé de n-nonane et de n-décane en mélange équimolaire. Le gaz (G1) arrive dans la colonne d'absorption C1 sous un débit de 1000 kg/h par le conduit 1, à la pression de 5 bar et à la température de -20°C. Sa composition molaire est la suivante : méthane 49,9 %, éthane 29,3%, propane 15,5%, n-butane 5,3%.

EXEMPLE 1 (comparatif)

Dans le schéma d'absorption classique de la figure 1, le solvant régénéré (L1) est injecté en tête de la colonne C1 par le conduit 2 sous un débit de 2000 kg/h. La température du solvant (L1) est de -20°C, sa pression de 5 bar. 57% du propane et 98% du n-butane contenus dans le gaz d'entrée (G1) sont absorbés par le solvant dans la colonne C1. Le gaz appauvri est évacué du procédé par le conduit 3 à la température de -5°C, sous un débit de 693 kg/h. Le solvant enrichi sort du fond de la colonne C1 par le conduit 4 à la température de 2°C et entre dans la vanne de détente V1, dont il sort partiellement vaporisé par le conduit 5 à la température de - 5°C et à la pression de 1,2 bar; le solvant enrichi rentre alors dans l'échangeur E1 où il est réchauffé par le solvant régénéré rentrant dans l'échangeur E1 par le conduit 9. Le solvant enrichi sort de l'échangeur E1 par le conduit 6 à la température de 110°C et entre dans la colonne de régénération C2, qui est une colonne de distillation à plateaux ou à garnissage. La puissance frigorifique du condenseur de la colonne C2 est de 44 kW, la puissance thermique du rebouilleur est de 78 kW. Les hydrocarbures légers désorbés quittent la colonne C2 et le procédé par le conduit 7 à la température de -20°C. Le solvant régénéré quitte la colonne C2 par le conduit 8 à la température de 158°C, entre dans la pompe P1 dont il sort par le conduit 9 à la pression de 5 bar, entre dans l'échangeur E1 d'où il ressort par le conduit 10 à la température de 5°C, avant d'être refroidi à -20°C par un fluide externe au procédé dans l'échangeur E2, d'une puissance frigorifique de 28 kW, dont il ressort par le conduit 11, est mélangé avec l'appoint de solvant arrivant par le conduit 12 et injecté dans la colonne C1 par le conduit 2.

EXEMPLE 2

Dans le schéma suivant la présente invention de la figure 2, le solvant régénéré (L1) est injecté en tête de la colonne C1 par le conduit 2 sous un débit de 2000 kg/h. La température du solvant (L1) est de -20°C, sa pression de 5 bar. 57% du propane et 98% du n-butane contenus dans le gaz d'entrée (G1) sont absorbés par le solvant dans la colonne C1. Le gaz appauvri est évacué du procédé par le conduit 3 à la température de - 5°C, sous un débit de 692 kg/h. Le solvant enrichi sort du fond de la colonne C1 par le conduit 4 à la température de 2°C et entre dans la vanne de détente V1, dont il sort partiellement vaporisé par le conduits 5 à la température de -5°C et à la pression de 1,2 bar; le solvant enrichi est alors injecté dans le dispositif de désorption D1, qui est est un échangeur-colonne comprenant une zone d'échange de chaleur interne et une zone de rebouillage. La puissance thermique du rebouilleur du dispositif D1 est de 50 kW. Les hydrocarbures légers désorbés quittent le dispositif D1 et le procédé par le conduit 7 à la température de 9°C. Le solvant régénéré quitte la zone de rebouillage du dispositif D1 par le conduit 8 à la température de 161°C, entre dans la pompe P1 dont il sort par le conduit 9 à la pression de 5 bar, est envoyé dans la zone d'échange de chaleur interne du dispositif D1 dont il sort à la température de 15°C par le conduit 10. De là, le solvant régénéré entre dans l'échangeur E2 où il est refroidi à -20°C par un fluide extérieur au procédé. La puissance frigorifique de l'échangeur E2 est de 39 kW. Le solvant régénéré sort de l'échangeur E2 par le conduit 11, est mélangé avec l'appoint de solvant arrivant par le conduit 12 et injecté dans la colonne C1 par le conduit 2.

En comparant les schémas des exemples 1 et, 2 on constate que la récupération de la fraction lourde $C_3^+$ est identique dans les deux cas; en revanche, les puissances thermiques et frigorifiques nécessaires sont inférieures respectivement de 36% et 46% dans le cas du schéma de la figure 2.

L'exemple précédent a montré comment le procédé selon l'invention peut être appliqué à la séparation entre le méthane et des hydrocarbures de masse molaire plus élevée.

Un autre exemple d'application concerne l'élimination de gaz acides, $CO_2$ et $H_2S$, d'un gaz naturel.

Si par exemple, il s'agit d'éliminer au moins partiellement un gaz acide d'un gaz naturel, il est possible d'opérer selon le schéma de principe de la figure 2 en mettant en contact le gaz naturel avec un solvant réfrigéré, par exemple à base de méthanol. Ce solvant peut contenir une proportion variable d'eau, par exemple entre 1% et 20% en masse, pour limiter la coabsorption d'hydrocarbures. Le solvant chargé en gaz acides sortant de la colonne C1 est envoyé dans le dispositif de régénération D1. Le gaz acide sort en tête du dispositif D1 et le solvant régénéré sort, via la zone de rebouillage B1, en tête de la zone d'échange de chaleur interne Z1.

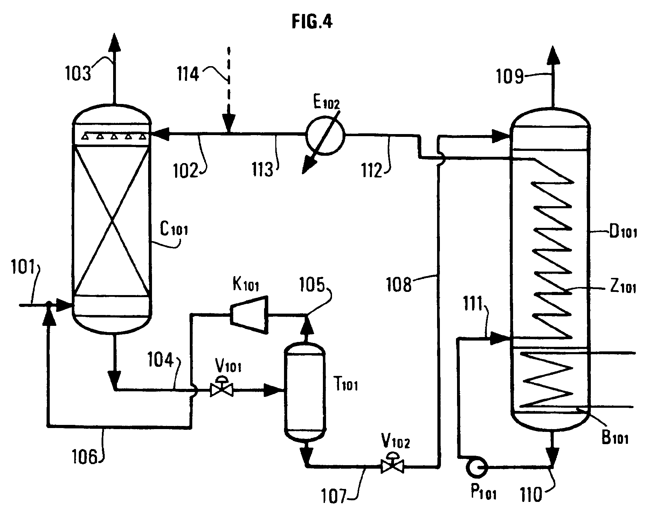

Pour limiter les pertes en hydrocarbures co-absorbés, on peut également opérer suivant le schéma de principe illustré par la figure 4. Dans l'exemple 3, le gaz à traiter (G1) est du méthane contenant 2000 ppm mole d'$H_2S$. Le solvant d'extraction (L1) est composé de méthanol et d'eau, la fraction massique de l'eau étant de 20 %. Le gaz (G1) entre dans le procédé sous un débit de 1608 kg/h par le conduit 101, à la pression de 30 bar et à la température de -30°C.

Exemple 3

Dans le schéma de la figure 4, le solvant régénéré (L1) est injecté en tête de la colonne C101 par le conduit 102 sous un débit de 3684 kg/h. La température du solvant (L1) est de -30°C, sa pression est de 30 bar. Le gaz à traiter arrive par le conduit 101, est mélangé à la fraction (G2) sortant du compresseur K101 par le conduit 106 puis introduit dans la colonne C101. Le gaz appauvri est évacué du procédé par le conduit 103 à la température de -31°C, sous un débit de 1576 kg/h. Sa teneur en $H_2S$ est de 4 ppm mole. Le solvant enrichi sort du fond de la colonne C101 par le conduit 104 à la température de -30°C. Il contient 26 kg/h de méthane et 7 kg/h d'$H_2S$, pour un débit total de 3716 kg/h.

Par le conduit 104 le solvant enrichi entre dans la vanne V101 dans laquelle il est détendu et partiellement vaporisé, puis entre dans le ballon T101 à la température de -32°C et à la pression de 6 bar.

La fraction gazeuse issue de la vaporisation partielle du solvant enrichi sort du ballon T101 par le conduit 105 et entre dans le compresseur K101, d'où elle sort par le conduit 106 à la température de 110°C et à la pression de 30 bar.

Ladite fraction gazeuse est ensuite mélangée au gaz à traiter (G1) arrivant dans le procédé par le conduit 101 puis introduite dans la colonne C101.

La fraction liquide (L2) issue de la vaporisation partielle du solvant enrichi sort du ballon T101 par le conduit 107, entre dans la vanne V102 dont elle sort partiellement vaporisée par le conduit 108 à la température de - 32°C et à la pression de 3 bar. La fraction (L2) contient 5,6 kg/h de méthane et 6,8 kg/h d'$H_2S$, pour un débit total de 3696 kg/h.

La fraction liquide (L2) entre par le conduit 108 dans le dispositif de désorption D101, qui est un échangeur-colonne comprenant une zone d'échange de chaleur interne Z101 et une zone de rebouillage B101. La puissance thermique du rebouilleur B101 est de 40 kW.

L'$H_2S$ et le méthane désorbés quittent le dispositif D101 et le procédé par le conduit 109 à la température de -25°C.

Le solvant régénéré quitte la zone de rebouillage B101 par le conduit 110 à la température de 101°C, entre dans la pompe P101 dont il sort par le conduit 111 à la pression de 30 bar, est envoyé dans la zone d'échange de chaleur Z101 dont il sort à -15°C par le conduit 112. Le solvant régénéré contient 0,016 kg/h d'$H_2S$.

Par le conduit 112, le solvant régénéré entre dans l'échangeur E102 où il est refroidi par un fluide extérieur au procédé jusqu'à la température de -30°C, puis sort de l'échangeur E102 par le conduit 113 avant d'être mélangé à l'appoint de solvant arrivant par le conduit 114 et d'être introduit dans la colonne C101 par le conduit 102. La puissance frigorifique de l'échangeur E102 est de 42 kW.

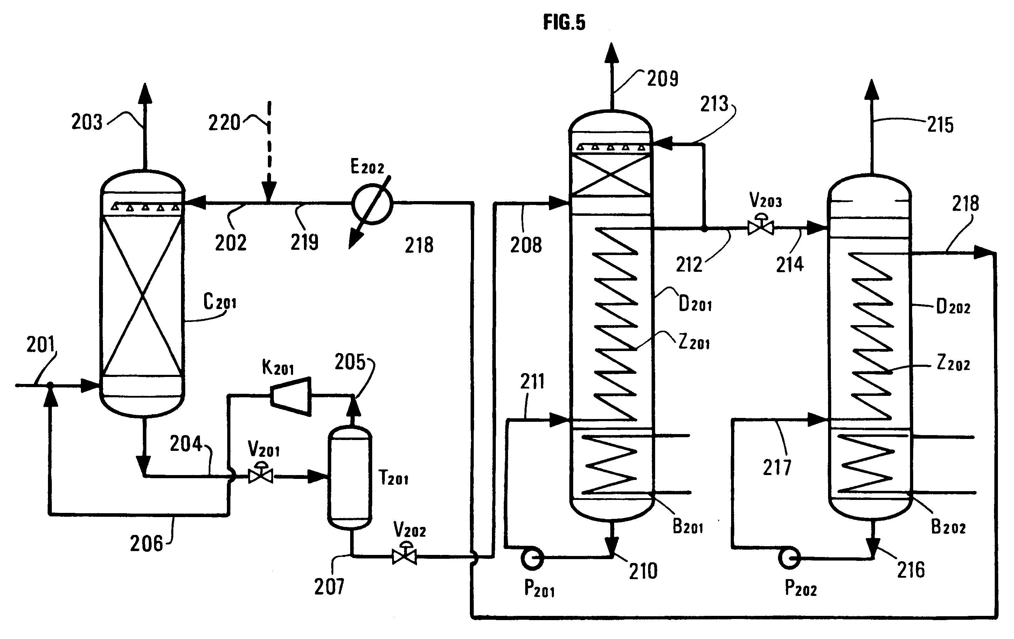

Dans le cas où l'on veut retirer d'un mélange gazeux deux gaz acides de volatilité différente, par exemple $CO_2$ et $H_2S$, et évacuer ces deux gaz dans des conduites distinctes, il est possible d'opérer suivant le schéma illustré par la figure 5 comme décrit ci-après.

La charge à traiter arrive par le conduit 201 dans le procédé, est mélangée à la fraction gazeuse arrivant du compresseur K201 par le conduit 206 et introduite dans la colonne C201 dans laquelle elle est mise en contact à contre-courant avec le solvant régénéré arrivant par le conduit 202. Le gaz désacidifié sort de la colonne C201 par le conduit 203 et est évacué du procédé.

Le solvant enrichi sort de la colonne par le conduit 204, entre dans la vanne V201 où il est détendu et partiellement vaporisé, puis entre dans le ballon T201.

La fraction gazeuse issue de cette détente sort du ballon T201 par le conduit 205, entre dans le compresseur K201 où elle est ramenée à la pression opératoire de la colonne C201, sort du compresseur K201 par le conduit 206, est mélangée à la charge à traiter arrivant dans le procédé par le conduit 201 et entre dans la colonne C201.

La fraction liquide issue de la détente du solvant enrichi dans la vanne V201 quitte le ballon T201 par le conduit 207, entre dans la vanne V202 où elle est éventuellement détendue, puis entre dans le dispositif de désorption D201, qui comprend une zone de rebouillage B201 et une zone d'échange de chaleur interne Z201.

Le solvant partiellement régénéré quitte le rebouilleur B201 par le conduit 210, entre dans la pompe P201, dont il sort par le conduit 211, entre dans la zone d'échange de chaleur Z201 dont il sort par le conduit 212. Une partie du solvant partiellement régénéré peut être réinjectée en tête du dispositif D201 pour laver la fraction gazeuse quittant le dispositif D201 et le procédé par le conduit 209, laquelle fraction gazeuse contient majoritairement le gaz acide le plus volatil. L'autre partie du solvant partiellement régénéré sortant de la zone d'échange de chaleur Z201 est détendue dans la vanne V203, dont elle sort par le conduit 214 pour entrer dans le dispositif de désorption D202, qui comprend une zone de rebouillage B202 et une zone d'échange de chaleur interne Z202.

Le gaz acide le moins volatil quitte le dispositif D202 par le conduit 215 et est évacué du procédé. Le solvant régénéré quitte la zone de rebouillage B202 par le conduit 216, entre dans la pompe P202, en sort par le conduit 217, entre dans la zone d'échange de chaleur Z202, sort du dispositif D202 par le conduit 218, est refroidi dans l'échangeur E202 par un fluide extérieur au procédé, quitte l'échangeur E202 par le conduit 219, est mélangé à l'appoint de solvant arrivant par le conduit 220 et entre dans la colonne C201 par le conduit 202.

Ces exemples ne sont pas cités à titre limitatif et, comme cela a déjà été indiqué, le procédé peut être appliqué à l'élimination d'eau en utilisant par exemple le diéthylène glycol ou le triéthyléne glycol comme solvant, ou à l'élimination de gaz acides, en utilisant par exemple la diéthanolamine comme solvant. Il peut être également utilisé sur un gaz de raffinerie ou tout autre gaz de synthèse pour l'élimination d'eau, de gaz acides, d'hydrocarbures paraffiniques, oléfiniques ou aromatiques, de manière sélective ou non.

## Revendications

1. Procédé de séparation d'un mélange de gaz G1 comprenant les étapes suivantes:

a) une étape d'absorption dans-une zone d'absorption C1 d'une fraction G2 de la fraction gazeuse G1 par un solvant L1, la fraction non absorbée du mélange G1 étant évacuée;
b) une détente du solvant L1 ayant absorbé la fraction G2 entrainant la vaporisation partielle des gaz absorbés G2 et un refroidissement du solvant L1 ;
c) une étape de désorption de la fraction gazeuse G2 dans laquelle on envoie le flux provenant de l'étape (b) en tête d'un dispositif de désorption D1 comprenant une zone de rebouillage B1 et une zône de désorption proprement dite, dans lequel circulent en contact globalement à contre-courant une phase liquide et une phase vapeur et dans lequel se séparent, en tête dudit dispositif de désorption, la fraction gazeuse G2 désorbée et en fond dudit dispositif de désorption le solvant L1 régénéré;
d) une étape d'échange thermique entre ledit solvant L1 régénéré et ledit flux provenant de l'étape (b) **s'écoulant à** contre-courant dans une zone d'échange thermique incluse **s'étendant sur pratiquement toute la hauteur** de la zone de désorption proprement dite;
e) le recyclage dudit solvant régénéré L1 vers la zone d'absorption C1.

## Claims

1. A process for separating a mixture of gases G1, comprising the following stages:

a) a stage of absorption of a fraction G2 of the mixture G1 by a solvent L1 in an absorption zone C1; the non-absorbed part being withdrawn;

b) expansion of the solvent L1 having absorbed the faction G2, leading to partial vaporisation of the absorbed gases G2 and cooling of the solvent L1;

c) a stage of desorption of gas fraction G2 in which the stream from stage (b) is passed to the top of a desorption apparatus D1 comprising a reboiling zone B1 and an actual desorption zone, in which a liquid phase and a vapour phase are circulated in substantially countercurrent contact and in which are separated the desorbed gas fraction G2, at the head of the desorption apparatus, and the regenerated solvent L1, at the bottom of said desorption apparatus;

d) a stage of heat exchange between said regenerated solvent L1 and said stream from stage (b) flowing in countercurrent in a heat exchange zone included and practically extending over the total height of the desorption zone itself;

e) recycling said regenerated solvent L1 to the absorption zone C1.

## Patentansprüche

1. Verfahren zur Trennung einer Gasmischung G1, umfassend die folgenden Schritte:

a) einen Schritt zur Absorption einer Fraktion G2 aus der gasförmigen Fraktion G1 durch ein Lösungsmittel L1 in einer Absorptionszone C1, wobei die nicht absorbierte Fraktion der Mischung G1 evakuiert wird,

b) eine Entspannung des Lösungsmittels L1, das die Fraktion G2 absorbiert hat, welche die teilweise Verdampfung von absorbierten Gasen G2 und eine Abkühlung des Lösungsmittels L1 nach sich zieht,

c) einen Schritt zur Desorption der gasförmigen Fraktion G2, bei welchem man den aus dem Schritt (b) stammenden Strom am Kopf einer Desorptionseinrichtung D1, die eine Abkochzone B1 und eine eigentliche Desorptionszone umfaßt, in welcher eine Flüssigphase und eine Dampfphase im ganzen im Gegenstrom in Kontakt zirkulieren und in welchem sich am Kopf der Desorptionseinrichtung die desorbierte gasförmige Fraktion G2 und am Boden der Desorptionseinrichtung das regenerierte Lösungsmittel L1 trennen, zuführt,

d) einen Schritt zum Wärmeaustausch zwischen dem regenerierten Lösungsmittel L1 und diesem aus dem Schritt (b) stammenden, im Gegenstrom fließenden Strom in einer eingeschlossenen Wärmeaustauschzone, die sich praktisch über die gesamte Höhe der eigentlichen Desorptionszone erstreckt,

e) die Zurückführung des regenerierten Lösungsmittels L1 zur Absorptionszone C1.

FIG.1

FIG.2

FIG.3

## FIG.4

**FIG.5**